# EUROPÄISCHE PATENTSCHRIFT

(11) **EP 2 002 224 B1**
(45) Veröffentlichungstag und Bekanntmachung des Hinweises auf die Patenterteilung: **05.12.2018**
(21) Anmeldenummer: 07724038.0
(22) Anmeldetag: 05.04.2007
(51) Int. Cl.: G01H 11/02, G10K 9/13

(54) **VIBRATIONSSENSOR MIT EINER IN SCHWINGUNG VERSETZBAREN MEMBRAN**
VIBRATION SENSOR HAVING A DIAPHRAGM WHICH CAN BE CAUSED TO OSCILLATE
DETECTEUR DE VIBRATION PRESENTANT UNE MEMBRANE SUSCEPTIBLE D'OSCILLER

(30) Priorität: 05.04.2006 DE 102006016355
(43) Veröffentlichungstag der Anmeldung: 17.12.2008
(73) Patentinhaber: VEGA Grieshaber KG, 77709 Wolfach (DE); ExxonMobil Research and Engineering Company, Annandale, NJ 08801-0900 (US)
(72) Erfinder: FEHRENBACH, Josef, 77712 Haslach (DE); MELLERT, Martin, 77790 Steinach (DE); ALVAREZ, Manuel, S., Warrenton, VA 20187 (US); WOLF, Henry, Alan, Morristown, NJ 07960 (US)
(74) Vertreter: Westphal, Mussgnug & Partner Patentanwälte mbB
(86) Internationale Anmeldenummer: PCT/EP2007/003097
(87) Internationale Veröffentlichungsnummer: WO 2007/113011

(56) Entgegenhaltungen:
- WO-A-96/04645
- CH-A5- 651 663
- DE-A1- 10 242 970
- DE-A1- 10 344 558
- US-A- 3 953 829

## Beschreibung

Die Erfindung bezieht sich auf einen Vibrationssensor mit den oberbegrifflichen Merkmalen des Patentanspruchs 1.

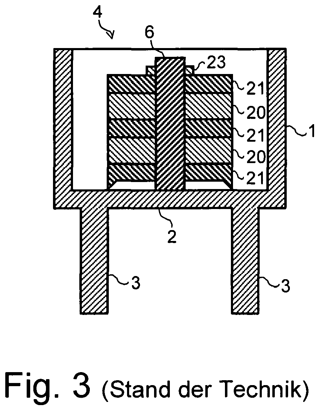

Ein anhand Fig. 3 skizzierter beispielhafter Vibrationssensor gemäß dem Stand der Technik besteht beispielsweise aus einem Gehäuse 1 mit einer stirnseitig des Gehäuses 1 befestigten Membran 2. Die Membran 2 verläuft quer zu den zylindrischen Gehäusewandungen des Gehäuses 1. Von der Membran 2 stehen Schwinggabeln 3 ab, welche zur Übertragung von Schwingungen von der Membran 2 in eine Umgebung oder aus einer Umgebung auf die Membran 2 dienen. In dem Gehäuse 1 ist eine Wandlereinrichtung 4 integriert, welche zum Umwandeln mechanischer Schwingungen in elektrische Signale oder umgekehrt elektrischer Signale in mechanische Schwingungen dient. Die Wandlereinrichtung 4 besteht aus einem zentralen Bolzen 6, welcher fest mit der Membran 2 verbunden ist, so dass Schwingungen vom Bolzen 6 auf die Membran 2 bzw. umgekehrt übertragen werden. Der Bolzen 6 durchdringt ein Paket aus piezoelektrischen Elementen 20 und diese umgreifenden Spannscheiben 21, wobei ein Teil der Spannscheiben 21 als Elektroden für die piezoelektrischen Elemente 20 ausgebildet ist. Mittels einer Spannschraube 23 werden die Spannscheiben 21 (mittlere Spannscheibe muss aus einem isolierenden Material sein, beispielsweise Keramik)und piezoelektrischen Elemente 20 gegen die Membran 2 gespannt, wobei die Spannschraube 23 in ein Außengewinde des Bolzens 6 eingreift. Ein derartiger Sensor, mit einer an einer Membran befestigten Schwinggabel, ist zum Beispiel in der Schrift DE 102 42 970 offenbart. Die WO 96/04645 offenbart einen Lautsprecher mit einem an einer Membran befestigten Bolzen. Der Bolzen schwingt frei in einer Spule.

Nachteilhaft bei einer solchen Anordnung ist, dass von der untersten Spannscheibe 21 deren gesamte Fläche oder ein Umfangsabschnitt von deren Außenumfang gegen die Membran 2 gespannt ist. Eine solche Anordnung, bei welcher das starre Paket der Wandlereinrichtung 4 sowohl mittig als auch im Bereich von dessen Außenumfang an der Membran 2 anliegt, führt zu einer nachteilhaften Versteifung der Membran 2.

Derartige Antriebe weisen immer eine direkte Kraftkopplung zur schwingungsfähigen Membran 2 auf. Ändert sich diese Kraftkopplung, so hat dies einen Einfluss auf die Resonanzfrequenz, so dass entsprechende Korrekturen von Anregungssignalen für die piezoelektrischen Elemente und/oder von Empfangssignalen der piezoelektrischen Elemente 20 vorgesehen werden müssen. Durch die Ausgestaltung der Wandlereinrichtung 4 als Antriebe für die Membran 2 mit den piezoelektrischen Elementen 20 und den Spannscheiben 21 bzw. Elektroden wird die Resonanzfrequenz der Gesamtanordnung ebenfalls mitbestimmt, da das Paket aus piezoelektrischen Elementen 20 und Elektroden bzw. Spannscheiben 21 und Isolierscheiben (21)auf der Membran 2 entweder aufgeklebt sein muss oder über einen Stapel mittels eines Bolzens 6 gegen die Membran 2 vorgespannt werden muss.

Neben dem Nachteil der direkten Krafteinkopplung, welche die schwingungsfähige Membran 2 versteift und dadurch die Resonanzfrequenz verändert, entstehen durch den Einsatz der piezoelektrischen Elemente 20 in der Wandlereinrichtung 4 weitere Nachteile. Wenn ein solcher Vibrationssensor bei Temperaturen bis zu 450° C eingesetzt werden soll, kann der Einsatz piezoelektrischer Elemente gar nicht oder nur mit hohem Aufwand funktionstüchtig ermöglicht werden. Außerdem muss bei solchen Anordnungen sichergestellt werden, dass die piezoelektrischen Elemente insbesondere bei dem Einsatz bei hohen Temperaturen mechanisch nicht beschädigt werden. Ein weiterer Nachteil besteht in dem thermischen Verhalten der piezoelektrischen Elemente, Elektroden, Isolierscheiben und Spannscheiben, wodurch eine kontinuierliche Vorspannung beim Einsatz über einen großen Temperaturbereich hinweg nicht oder nur schwer sichergestellt werden kann.

Die Aufgabe der Erfindung besteht darin, einen Vibrationssensor mit einer alternativ ausgestalteten Wandlereinrichtung ßen Temperaturbereich hinweg nicht oder nur schwer sichergestellt werden kann.

Die Aufgabe der Erfindung besteht darin, einen Vibrationssensor mit einer alternativ ausgestalteten Wandlereinrichtung vorzuschlagen. Dabei soll eine Schwinggabel und eine Membran anregbar sein ohne einen direkten Kraftschluss auf die Membran 2 durch die Wandlereinrichtung zu erzeugen, um Einflüsse der Wandlereinrichtung auf die Schwingfrequenz zu reduzieren oder zu vermeiden.

Diese Aufgabe wird gelöst durch einen Vibrationssensor mit den Merkmalen des Patentanspruchs 1. Vorteilhafte Ausgestaltungen sind Gegenstand von abhängigen Ansprüchen.

Erfindungsgemäß wird ein Vibrationssensor mit einer in Schwingung versetzbaren Membran, mit einer Wandlereinrichtung zum Versetzen der Membran in Schwingung und zum Abgreifen einer Schwingung der Membran und mit einem Schwingkörper zum Übertragen der Schwingungen von der Membran in einen umgebenden Raum und aus einem umgebenden Raum auf die Membran, wobei der Schwingkörper als eine Schwinggabel ausgebildet ist. Dabei weist die Wandlereinrichtung eine Spule und einen Bolzen auf, wobei der Bolzen zur Übertragung der Schwingungen zur oder von der Membran mit der Membran verbunden ist und wobei die Spule und der Bolzen derart zusammenwirkend angeordnet sind, dass eine Schwingung des Bolzens einen Stromfluss in der Spule induziert und ein Magnetfeld induzierender Stromfluss in der Spule eine Schwingung des Bolzens bewirkt.

Dabei wird eine solche Anordnung ermöglicht, dass eine Schwinggabel angeregt werden kann ohne einen direkten Kraftschluss der Wandlereinrichtung auf die Membran und darüber auf die Schwinggabel. Dies ermöglicht vorteilhaft, dass die einen Antrieb ausbildende Wandlereinrichtung keinen oder einen nur noch reduzierten Einfluss auf die Schwingfrequenz bzw. die Resonanzfrequenz hat. Dadurch ist vorteilhaft auch eine deutlich lereinrichtung keinen Einfluss mehr auf die Schwingungseigenschaften haben.

Bevorzugt wird insbesondere ein Vibrationssensor, bei dem der Bolzen aus einem magnetisierbaren oder aus einem magnetischen Material ausgebildet ist, so dass er ideal mit der Spule zusammenwirken kann. Bevorzugt ist der Bolzen direkt an der Membran befestigt oder einstückig mit der Membran ausgebildet. Bevorzugt ist der Bolzen mittig der Membran an der Membran angeordnet. Vorteilhaft ist der Bolzen mit einem Tauchkondensator gekoppelt ist zum Abreifen einer Bolzenschwingung des Bolzens als ein Messsignal.

Bevorzugt wird insbesondere ein Vibrationssensor, bei dem die Spule an einer Gehäusewandung eines Gehäuses befestigt ist. Vorteilhaft ist die Spule auf einem Spulenträger sitzend angeordnet, wobei der Spulenträger die Spule relativ zu einer Gehäusewand eines Gehäuses festlegt.

Bevorzugt wird insbesondere ein Vibrationssensor, bei dem die Membran an einer Gehäusewandung eines Gehäuses angeordnet, insbesondere befestigt ist. Jedoch kann die Membran auch einstückig als Bestandteil der Gehäusewandung ausgebildet sein.

Vorteilhaft ist ein Vibrationssensor, bei dem ein Spulenleiter der Spule mit einer temperaturbeständigen Ummantelung elektrisch isoliert ist. Bevorzugt ist der Spulenleiter dazu aus einem keramischen Material ausgebildet.

Vorteilhaft ist ein Vibrationssensor, dessen Komponenten, insbesondere dessen Spulenleiter der Spule, temperaturbeständig sind bis mindestens zu 350°C, insbesondere bis zu mindestens 450°C. Auch Beständigkeiten über diese Temperatur können für zukünftige Einsatzgebiete vorteilhaft berücksichtigt werden. Ein Ausführungsbeispiel wird nachfolgend anhand der Zeichnung näher erläutert. Es zeigen:
- Fig. 1: eine erste Ausführungsform eines bevorzugten Vibrationssensors in Schnittansicht,
- Fig. 2: eine zweite Ausführungsform eines solchen Vibrationssensors in Schnittansicht und
- Fig. 3: einen beispielhaften Vibrationssensor gemäß dem Stand der Technik in Schnittansicht.

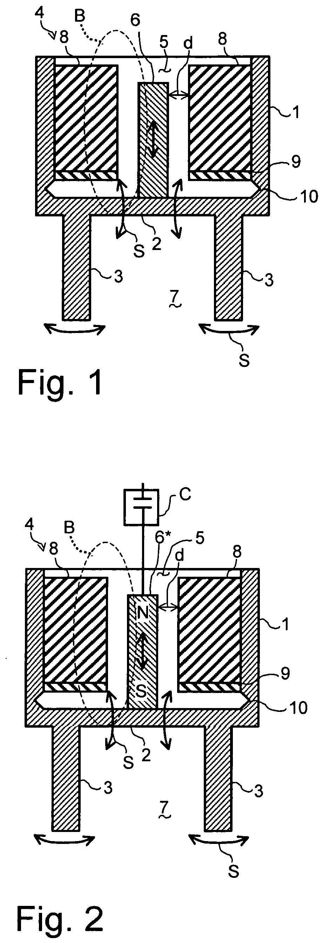

Fig. 1 zeigt eine Schnittansicht durch eine bevorzugte Ausführungsform eines Vibrationssensors. Dargestellt sind dabei nur grundlegende Komponenten zur Erläuterung des Grundprinzips. Weitere Komponenten, wie beispielsweise Anschlusskabel oder Gehäusedeckel sind zur Bewahrung der Übersicht nicht dargestellt. Insbesondere sind die dargestellten Komponenten, wie beispielsweise eine Gehäusewandung auch hinsichtlich der konkreten Ausgestaltung modifizierbar.

Dargestellt ist ein beispielhaftes Gehäuse 1 mit einer vorzugsweise zylindrischen Gehäusewandung. Stirnseitig des Gehäuses 1 ist eine Membran 2 befestigt, welche hinsichtlich Dimensionierung, Befestigung und/oder Material schwingungsfähig ausgebildet ist. Von der Membran 2 stehen Schwinggabeln 3 ab, welche eine Schwingung S der Membran 2 auf einen die Schwinggabeln 3 umgebenden Raum 7 übertragen. Zusätzlich oder alternativ ist auch eine Übertragung von Schwingungen aus Richtung des Raums 7 über die Schwinggabeln 3 auf die Membran 2 oder direkt aus dem Raum 7 auf die Membran 2 möglich, um die Membran 2 in entsprechende Schwingungen S zu versetzen.

In einem Innenraum 5 des Gehäuses 1 ist eine Wandlereinrichtung 4 angeordnet, welche angelegte elektrische Signale als eine Antriebseinrichtung in eine Schwingung umsetzt, wobei die Schwingung auf die Membran 2 übertragen wird. Zusätzlich oder alternativ können entsprechend auch Schwingungen von der Membran 2 auf die Wandlereinrichtung 4 übertragen und in dieser in entsprechende Ströme umgesetzt werden.

Gemäß der besonders bevorzugten Ausführungsform besteht die Wandlereinrichtung 4 aus einer Spule 8, wobei die Spule 8 einen magnetisierbaren Bolzen 6 umgreift. Der Bolzen 6 ist dabei zwischen den Innenwandungen der Spule 8 in Richtung eines mittels der Spule 8 induzierbaren Magnetfeldes B beweglich angeordnet. Ein Spalt d zwischen dem Außenumfang des Bolzens 6 und dem Innenumfang der Spule 8 ist dabei vorzugsweise gering gehalten, um einerseits eine freie Bewegung des Bolzens 6 in dessen Längsrichtung zu ermöglichen und andererseits eine baulich möglichst kompakte Anordnung zu ermöglichen.

Der Bolzen 6 ist im Bereich seiner einen Stirnseite mit der Membran 2 fest verbunden, beispielsweise angeklebt oder angeschweißt, um eine durch das Magnetfeld B der Spule 8 dem Bolzen 6 aufgezwungene Bewegung relativ zu dem Gehäuse 1 auf die Membran 2 übertragen zu können. In umgekehrter Richtung führt eine Schwingung S der Membran 2 zu einer entsprechenden Bewegung des Bolzens 6 innerhalb der Spule, wodurch in der Spule 8 ein der Schwingung entsprechender Stromfluss induziert wird.

Gemäß bevorzugter Ausgestaltungen können diverse Modifikationen vorgenommen werden. Beispielsweise kann der Übergang von dem Gehäuse 1 zu der Membran 2 insbesondere bei einer einstückigen Ausgestaltung eine Schwächung 10 vorsehen, um eine zu starre Kopplung der Membran 2 an der Gehäusewandung des Gehäuses 1 zu vermeiden. Möglich ist auch eine Anordnung der Membran 2 an einer Innenwandung des Gehäuses oder über ein zusätzliches Kopplungselement an dem Gehäuse 1. Weiterhin ist prinzipiell eine einstückige Ausgestaltung von Membran 2 und Bolzen 6 möglich, um eine zweistückige Anfertigung und nachträgliche Fixierung des Bolzens 6 an der Membran 2 vermeiden zu können.

Neben einer Fixierung der Spule 8 mittels ihres Außenumfangs an einer Innenwandung des Gehäuses 1 kann die Spule 8 auch auf einem Spulenträger 9 angeordnet sein, welcher an der Gehäusewandung des Gehäuses 1 befestigt ist oder einstückig mit dieser ausgebildet ist. Dies ermöglicht ein je nach Anwendungszweck geeignetes Auswählen einer speziellen Spule und/oder ein Austauschen einer Spule 8, beispielsweise dann, wenn die Spule 8 durch Alterungs- oder Wärmeeinflüsse nicht mehr sicher funktionieren könnte.

Für einen Einsatz bei höheren Temperaturen wird vorzugsweise eine Spule 8 mit temperaturbeständiger Ummantelung der Spulenleiter der Spule 8 eingesetzt. Eine solche temperaturbeständige Ummantelung kann beispielsweise aus einem keramischen Material bestehen, welches den Spulenleiter elektrisch isoliert und einen Einsatz bei Temperaturen bis zu 350° C oder insbesondere bis 450° C oder noch höheren Temperaturen ermöglicht.

Fig. 2 zeigt eine gegenüber Fig. 1 modifizierte Ausführungsform, wobei nachfolgend lediglich gegenüber Fig. 1 abweichende Komponenten beschrieben werden.

Gemäß der ersten Ausführungsform ist ein magnetisierbarer Bolzen 6 als ein Zugbolzen an der Membran befestigt, so dass der Bolzen 6 durch die Spule 8 nach innen gezogen wird, ohne dabei die Membran 2 zu versteifen. Gemäß der zweiten, modifizierten Ausführungsform ist ein magnetisierter Bolzen 6* an der Membran 2 befestigt. Ein solcher magnetischer bzw. magnetisierter Bolzen 6* ermöglicht, die schwingungsfähige Membran 2 besonders vorteilhaft in beide Schwingungsrichtungen des Bolzens 6* anzutreiben.

Gemäß der modifizierten Ausführungsform ist der Bolzen 6* außerdem mit einem Tauchkondensator C gekoppelt. Dies ermöglicht, eine Schwingbewegung der Membran 2 bzw. des Bolzens 6* direkt am Bolzen 6* abzugreifen und nicht über eine indirekte Induzierung eines elektrischen Stroms in der Spule 8 abgreifen zu müssen. Neben einer Anordnung eines solchen Tauchkondensators C stirnseitig des Bolzens 6* können beispielsweise auch entsprechende Kondensatoranordnungen seitlich des Bolzens 6* vorgesehen werden, beispielsweise in einem Bereich stirnseitig der Spule 8 zwischen der Spule 8 und der Membran 2.

Einsetzbar sind derartige Vibrationssensoren vorteilhaft insbesondere bei erhöhten Umgebungstemperaturen. Vorteilhaft kann mit der Schwinggabel 3 eine Korrosionsmessung durchgeführt werden, wobei das Messsignal von der Resonanzfrequenz der Schwinggabel 3 und/oder der Membran 2 abgeleitet wird. Dies wird besonders vorteilhaft ermöglicht, da die Resonanzfrequenz bzw. Schwingfrequenz nicht von unerwünschten Nebeneffekten durch eine starre oder direkt fest mit der Membran 2 verspannte Antriebseinrichtung beeinflusst wird.

Wenngleich im Zusammenhang mit den Figuren konkrete Ausführungsbeispiele des induktiven Antriebs offenbart wurden, ist die Erfindung hierauf nicht beschränkt. Andere Anordnungen des Permanentmagneten und/oder der Spule sind ebenfalls möglich. Ebenso sind andere Positionen des Magneten zur Membran und Spule möglich.

## Patentansprüche

1. Vibrationssensor mit
- einer in Schwingung versetzbaren Membran (2),
- einer Wandlereinrichtung (4) zum Versetzen der Membran (2) in Schwingung (S) und/oder zum Abgreifen einer Schwingung (S) der Membran (2) und
- einem Schwingkörper (3) zum Übertragen der Schwingungen (S) von der Membran (2) in einen umgebenden Raum (7) und/oder aus einem umgebenden Raum (7) auf die Membran (2) wobei der Schwingkörper als eine Schwinggabel ausgebildet ist, **dadurch gekennzeichnet dass**
- die Wandlereinrichtung (4) eine Spule (8) und einen Bolzen (6; 6*) aufweist,
- wobei der Bolzen (6; 6*) zur Übertragung der Schwingungen (S) zur oder von der Membran (2) mit der Membran (2) verbunden ist und
- die Spule (8) und der Bolzen (6; 6*) derart zusammenwirkend angeordnet sind, dass eine Schwingung (S) des Bolzens (6; 6*) einen Stromfluss in der Spule (8) induziert und/oder ein Magnetfeld (B) induzierender Stromfluss in der Spule (8) eine Schwingung des Bolzens (6; 6*) bewirkt.

2. Vibrationssensor nach Anspruch 1, bei dem der Bolzen (6) aus einem magnetisierbaren Material ausgebildet ist.

3. Vibrationssensor nach Anspruch 1, bei dem der Bolzen (6*) aus einem magnetischen Material ausgebildet ist.

4. Vibrationssensor nach einem vorstehenden Anspruch, bei dem der Bolzen (6; 6*) direkt an der Membran (2) befestigt ist oder einstückig mit der Membran (2) ausgebildet ist.

5. Vibrationssensor nach einem vorstehenden Anspruch, bei dem der Bolzen (6; 6*) mittig der Membran (2) an der Membran (2) angeordnet ist.

6. Vibrationssensor nach einem vorstehenden Anspruch, bei dem der Bolzen (6*) mit einem Tauchkondensator (C) gekoppelt ist zum Abreifen einer Bolzenschwingung des Bolzens (6*) als ein Messsignal.

7. Vibrationssensor nach einem vorstehenden Anspruch, bei dem die Spule (8) an einer Gehäusewandung eines Gehäuses (1) befestigt ist.

8. Vibrationssensor nach einem vorstehenden Anspruch, bei dem die Spule (8) auf einem Spulenträger (9) sitzend angeordnet ist, wobei der Spulenträger (9) die Spule (8) relativ zu einer Gehäusewand eines Gehäuses (1) festlegt.

9. Vibrationssensor nach einem vorstehenden Anspruch, bei dem die Membran (2) an einer Gehäusewandung eines Gehäuses (1) angeordnet, insbesondere befestigt ist.

10. Vibrationssensor nach einem vorstehenden Anspruch, bei dem ein Spulenleiter der Spule (8) mit einer temperaturbeständigen Ummantelung elektrisch ioliert ist.

11. Vibrationssensor nach Anspruch 10, bei dem der Spulenkörper aus einem keramischen Material ausgebildet ist.

12. Vibrationssensor nach einem vorstehenden Anspruch, dessen Komponenten, insbesondere dessen Spulenleiter der Spule (8), temperaturbeständig ist bis mindestens zu 350°C, insbesondere bis zu mindestens 450°C.

## Claims

1. Vibration sensor comprising
- a diaphragm (2)capable of being set into oscillation,
- a transducer device (4) for setting said diaphragm (2) into oscillation (S) and/or for tapping off an oscillation (S) of said diaphragm (2) and
- an oscillating body (3) for transmitting the oscillations (S) of said diaphragm (2) into a surrounding area (7) and/or from a surrounding area (7) onto said diaphragm (2), **characterised in that**
- the transducer device (4) has a coil (8) and a bolt (6; 6*),
- whereby the bolt (6; 6*) is connected to said diaphragm (2) for transmitting the oscillations (S) to or from said diaphragm (2) and
- the coil (8) and the bolt (6; 6*) are arranged so as to interact with one another in such a way that an oscillation (S) of the bolt (6; 6*) induces a current flow in said coil (8) and/or that a current flow inducing a magnetic field (B) brings about an oscillation of the bolt (6; 6*) in said coil (8) .

2. Vibration sensor according to claim 1, wherein the bolt (6) is made of a magnetizable material.

3. Vibration sensor according to claim 1, wherein the bolt (6*) is made of a magnetic material.

4. Vibration sensor according to any one of the above claims, wherein the bolt (6; 6*) is directly fastened to the diaphragm (2) or is formed integrally with the diaphragm (2).

5. Vibration sensor according to any one of the above claims, wherein the bolt (6; 6*) is arranged on the diaphragm (2)centrically with respect to said diaphragm (2).

6. Vibration sensor according to any one of the above claims, wherein the bolt (6*) is coupled with a dip condenser (C) for tapping off an oscillation of the bolt (6*) as a measurement signal.

7. Vibration sensor according to any one of the above claims, wherein the coil (8) is fastened on a wall of a housing (1).

8. Vibration sensor according to any one of the above claims, wherein the coil (8) is arranged so as to sit on a coil support (9), the coil support (9) defining the coil (8) relative to a wall of a housing (1).

9. Vibration sensor according to any one of the above claims, wherein the diaphragm (2) is arranged, in particular fastened, on a wall of a housing (1).

10. Vibration sensor according to any one of the above claims, wherein a coil conductor of the coil (8) is electrically insulated with a heat-resistant jacket.

11. Vibration sensor according to claim 10, wherein the coil body is made of a ceramic material.

12. Vibration sensor according to any one of the above claims, the components of which, in particular the conductor of the coil (8), is heat-resistant up to at least 350°, in particular up to at least 450°C.

## Revendications

1. Capteur de vibrations comprenant :
- une membrane (2) susceptible d'osciller,
- un dispositif convertisseur (4) permettant de faire osciller la membrane (2) avec des oscillations (S) et/ou d'arrêter les oscillations (S) de la membrane, et
- un corps oscillant (3) permettant de transmettre les oscillations (S) de la membrane (2) dans un volume environnant (7) et/ou d'un espace environnant (7) sur la membrane (2),
**caractérisé en ce que**
le dispositif convertisseur (4) comporte une bobine (8) et un boulon (6, 6*),
le boulon (6, 6*) étant relié à la membrane (2) pour permettre de transmettre les oscillations (S) vers ou à partir de cette membrane (2), et
la bobine (8) et le boulon (6, 6*) étant montés de façon à coopérer pour que des oscillations (S) du boulon (6, 6*) provoquent un flux de courant dans la bobine (8) et/ou qu'un flux de courant produisant un champ magnétique (B) dans la bobine (8) entraîne des oscillations du boulon (6, 6*).

2. Capteur de vibrations conforme à la revendication 1,
dans lequel le boulon (6) est réalisé en un matériau magnétisable.

3. Capteur de vibrations conforme à la revendication 1,
dans lequel le boulon (6*) est réalisé en un matériau magnétique.

4. Capteur de vibrations conforme à l'une des revendications précédentes,
dans lequel le boulon (6, 6*) est fixé directement sur la membrane ou est réalisé en une seule pièce avec la membrane (2).

5. Capteur de vibrations conforme à l'une des revendications précédentes,
dans lequel le boulon (6, 6*) est monté sur la membrane (2) à la partie centrale de celle-ci.

6. Capteur de vibrations conforme à l'une des revendications précédentes,
dans lequel le boulon (6*) est couplé à un condensateur à immersion (C) de façon à délivrer une oscillation constituant un signal de mesure.

7. Capteur de vibrations conforme à l'une des revendications précédentes,
dans lequel la bobine (8) est fixée à une paroi d'un boîtier (1).

8. Capteur de vibrations conforme à l'une des revendications précédentes,
dans lequel la bobine (8) est positionnée sur un porte-bobine (9), ce porte-bobine (9) fixant la bobine (8) par rapport à une paroi d'un boîtier (1).

9. Capteur de vibrations conforme à l'une des revendications précédentes,
dans lequel la membrane (2) est montée en particulier fixée sur une paroi d'un boîtier (1).

10. Capteur de vibrations conforme à l'une des revendications précédentes,
dans lequel un conducteur de la bobine (8) est isolé électriquement par une enveloppe résistant à la température.

11. Capteur de vibrations conforme à la revendication 10,
dans lequel le corps de la bobine est réalisé en un matériau céramique.

12. Capteur de vibrations conforme à l'une des revendications précédentes dont les composants, en particuliers le conducteur de la bobine (8) sont résistants à la température jusqu'à au moins environ 350°C, en particulier jusqu'à au moins 450°C.
